# EUROPÄISCHE PATENTSCHRIFT

(11) **EP 0 573 774 B1**
(45) Veröffentlichungstag und Bekanntmachung des Hinweises auf die Patenterteilung: **31.07.1996**
(21) Anmeldenummer: 93107136.9
(22) Anmeldetag: 03.05.1993
(51) Int. Cl.: G02B 21/36, G02B 27/34, G02B 23/10, G02B 21/00

(54) **Mikroskop**
Microscope
Microscope

(30) Priorität: 12.06.1992 DE 4219299
(43) Veröffentlichungstag der Anmeldung: 15.12.1993
(73) Patentinhaber: LEICA MIKROSKOPIE UND SYSTEME GmbH, D-35530 Wetzlar (DE)
(72) Erfinder: Schalz, Karl-Josef, W-6290 Weilburg 6 (DE); Gaul, Norbert, W-6336 Solms-Oberbiel (DE)
(74) Vertreter: Stamer, Harald, Dipl.-Phys.

(56) Entgegenhaltungen:
- EP-A- 0 088 985
- CH-A- 284 134
- DE-A- 2 361 692
- GB-A- 1 373 157
- US-A- 3 331 650
- US-A- 4 174 159
- US-A- 4 274 092

## Beschreibung

Die Erfindung betrifft ein Mikroskop gemäß dem Oberbegriff des Anspruchs 1.

Aus der EP-A1-0 088 985 ist ein Photomikroskop mit einer Einrichtung zur Überlagerung des Bildes im Binokulartubus mit Zusatzinformationen bekannt, wobei ein Flüssigkeitskristall-Anzeigefeld verwendet ist, das transparente Zeichen bzw. Symbole darstellt und von einer Durchlichtprojektionseinrichtung beleuchtet wird. Das Anzeigenfeld enthält elektrisch ansteuerbare Segmente und wird in die Zwischenbildebene im Okulartubus abgebildet. Ein getrennt schaltbarer Teilbereich des Anzeigefeldes oder ein zweites, getrennt beleuchtbares Anzeigefeld wird mittels Reflektoren in die Filmebene eingeblendet. Auf diese Weise ist ein Teil der Informationen während des Mikroskopierens für den Beobachter sichtbar, während ein zweiter Teil der Informationen zur Abbildung in eine der visuellen Beobachtung nicht ohne weiteres zugängliche Bildebene gelangt.

Aus der US-A 4 274 092 ist es bekannt, eine LED-Anzeige in eines der beiden Okulare eines Mikroskops einzuspiegeln. Dazu ist seitlich an einem der Okularstutzen das eine Ende eines rohrförmigen Ansatzes befestigbar, an dessen anderen Ende die LED-Anzeige angeordnet ist. Diese ist über einen elektronischen Regelkreis mit einem Computer verbunden, in den Daten eingebbar sind, welche durch Rückkopplung über die LED-Anzeige dem mikroskopischen Bild überlagert werden können. Ein Einspiegeln in die Zwischenbildebene des Okulars findet bei diesem bekannten Mikroskop nicht statt, weswegen die überlagerte Anzeige nicht fotografierbar ist. Eine Bewegung derselben ist gleichfalls nicht möglich.

Aus der DE-A-2 361 692 ist ein Mikroskop mit einer fotografischen Kamera bekannt, wobei das auf der Bildaufzeichnungsebene der Kamera entworfene Bild des Objektes mittels eines Hilfsbildes eines Schärfenindikators scharf einstellbar ist. Das Hilfsbild ist dem Strahlengang einer visuellen Beobachtungseinrichtung überlagert. Dazu wird vom Objektstrahlengang mittels eines innerhalb des Binotubus des Mikroskops angeordneten Strahlenteilers ein Strahlengang abgezweigt und das Hilfsbild mittels einer Abbildungsoptik dem mikroskopischen Bild überlagert. Der Schärfeindikator ist fest im Mikroskop eingebaut und unbeweglich.

Der Erfindung liegt die Aufgabe zugrunde, ein Mikroskop der eingangs genannten Art zu schaffen, dessen visuellem Bild beliebig wählbare Bildinformationen mittels einer aus nur wenigen Bauteilen bestehenden Vorrichtung überlagert sind, die gegenüber dem Bild verschiebbar und in jeder gewünschten Lage selbsttätig feststellbar sind.

Auf diese Weise können Markierungen wie Hinweispfeile, Umrandungen, aber auch Zahlen, Buchstaben, graphische Darstellungen etc. vom Beobachter im mikroskopischen Bild beliebig platziert und auch fotografisch festgehalten werden.

Mit Vorteil ist als Bildinformation ein gerahmtes Diapositiv verwendet, das in der Halterung mittels einer Feder festklemmbar ist. Dadurch können die unterschiedlichsten Bildinformationen für die entsprechenden mikroskopischen Anwendungen in einfacher Weise bereitgestellt und Diarähmchen verschiedener Dicke verwendet werden.

Gemäß einer zweckmäßigen Weiterbildung der Erfindung ist die Gleitfläche mit einer Schicht aus magnetischem Material versehen, während auf der Halterung Permanentmagnete angeordnet sind. Das die Bildinformation tragende Diapositiv kann auf diese Weise leicht von Hand in x/y-Richtung verschoben sowie gedreht werden, wobei die eingestellte Lage nach Wegfall der Einwirkung erhalten bleibt.

Weitere vorteilhafte Ausgestaltungen der Erfindung ergeben sich aus den Unteransprüchen.

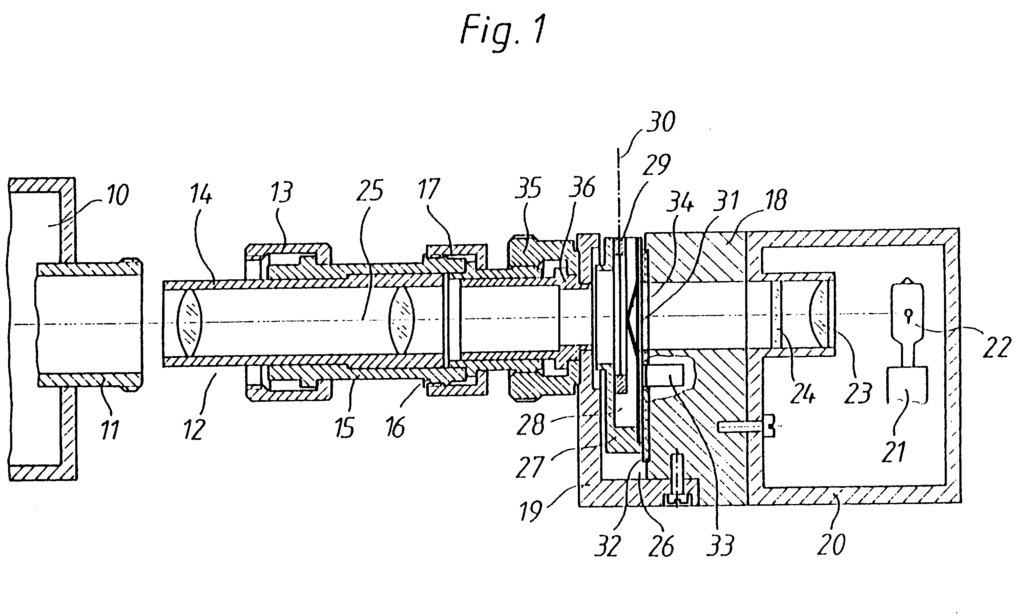

Aus der nachfolgenden Beschreibung eines schematisch in der Zeichnung dargestellten Ausführungsbeispiels gehen weitere Einzelheiten der Erfindung hervor. Dabei wurde auf die Wiedergabe bekannter oder zum Verständis der Erfindung nicht erforderlicher Bauteile verzichtet.

In der Figur ist an einem Binotubus 10 eines hier nicht gezeigten Mikroskops rechtwinklig zur Einblickrichtung ein Aufnahmestutzen 11 für ein im wesentlichen rohrförmiges Optikteil 12 vorgesehen. Dieses ist mittels eines Verbindungsringes 13 am Aufnahmestutzen 11 befestigt, beispielsweise verschraubbar. Das Optikteil 12 besteht im wesentlichen aus einem Trägerrohr 14 und einem dieses umgebenden Mantel 15. Im Trägerrohr 14 sind hier nicht näher bezeichnete Linsen befestigt. Der Mantel 15 ist an seinem dem Verbindungsring 13 gegenüberliegenden Ende mit einem angeformten Gewindering 16 versehen, welcher mit einem endseitigen Anschlußring 17 einer Aufnahme 18 verschraubt ist.

Die Aufnahme 18 weist ein zylindrisches Gehäuse 19 mit abgeflachten Seitenflächen auf, an dem ein gleichfalls zylindrisches Lampenhaus 20 befestigt ist. Dieses enthält eine auf einer Lampenfassung 21 montierte Projektionslampe 22 und eine Kondensorlinse 23 mit einem vorgesetzten Wärmeschutzfilter 24. Auf diese Weise ergibt sich zusammen mit dem Optikteil 12 ein Projektionsstrahlengang 25, wie er an sich von Projektoren bekannt ist. Im Gehäuse 19 der Aufnahme 18 ist ein schlitzförmiger Einschnitt 26 vorgesehen in dem eine Halterung 27 mit einem Einsteckschlitz 28 für ein gerahmtes Diapositiv 29 als Bildinformation eingesetzt ist, die in einer Objektebene 30 des Projektionsstrahlenganges 25 liegt.

Die Halterung 27 ist als kreissegmentförmige Scheibe ausgebildet, deren eine dem Lampenhaus 20 zugekehrte Wandfläche 31 aus einem magnetischen Material, beispielsweise Stahlblech, besteht oder damit beschichtet ist. Die Wandfläche 31 liegt auf einer Gleitfläche 32 auf, die aus einem reibungsarmen Kunststoffbelag, z.B. aus Polytetrafluoräthylen, auf der Seitenwand der Aufnahme 18 gebildet ist. In der Aufnahme 18 sind stabförmige Permanentmagnete 33 eingesetzt, von denen nur einer gezeigt ist. Auf diese Weise liegt in dem Spalt zwischen der Wandfläche 31 und den Permanentmagneten 33 ein Magnetfeld vor, wodurch die Halterung 27 zusammen mit dem Diapositiv 29 in dem Einschnitt 26 frei bewegbar ist. Aufgrund der abgeflachten Seitenflächen des Gehäuses 19 kann die Halterung 27 bequem von Hand erfaßt und beliebig verschoben werden, wobei nach Wegfall der Einwirkung die Halterung 27 nebst dem Diapositiv 29 automatisch in der gewünschten Lager bleiben. Zur Verwendung von Diapositiven 29 mit Rahmen unterschiedlicher Dicke ist an der Wandfläche 31 eine Feder 34 angeordnet. Der Scharfeinstellung dient ein Fokussierring 35, der auf einem Rohrstutzen 36 der Aufnahme 18 befestigt ist, bei Betätigung der Aufnahme 18 gegenüber dem Optikteil 12 in axialer Richtung verschiebt und so eine Ablage der Objektebene 30 ausgleicht.

Lampe 22, Kondensor 23 und Optikteil 12 bilden zusammen eine herkömmliche Projektionseinrichtung, welche eine oder mehrere vom Diapositiv 29 getragene Bildinformationen in einer Zwischenbildebene im Binotubus 10 abbildet. Durch die Abbildung in der Zwischenbildebene wird erreicht, daß die dem mikroskopischen Bild überlagerte Bildinformation nicht nur beidäugig betrachtbar ist, sondem auch fotografier- und übertragbar ist, beispielsweise auf einen Bildschirm. Der Projektionsstrahlengang 25 trifft im Binotubus 10 auf ein Prisma 38 und wird von diesem abgelenkt. Die Bildinformation wird in der Zwischenbildebene der beiden hier nicht gezeigten Okulare des Binotubus 10 abgebildet und kann sodann zusammen mit dem mikroskopischen Bild betrachtwt werden.

Die Erfindung ist nicht auf das beschriebene Ausführungsbeispiel beschränkt, vielmehr sind Variationen möglich. So kann beispielsweise die Halterung durch Haftreibung innerhalb der Aufnahme festgelegt und diese kann mit dem Optikteil einstückig sein.

## Patentansprüche

1. Mikroskop mit einer an dessen Okulartubus 10 befestigten Aufnahme (18) zur Überlagerung eines mikroskopischen Bildes mit zusätzlichen Bildinformationen mittels Projektion und Einspiegelung derselben in die Zwischenbildebene im Okulartubus (10), dadurch gekennzeichnet, daß ein Bildinformationsträger (29) in einer Halterung (27) befestigbar und mit dieser auf einer zur durch den Bildinformationsträger (29) gebildeten Objektebene (30) parallelen Gleitfläche (32) innerhalb der Aufnahme (18) frei bewegbar ist sowie in jeder eingestellten Position fixierbar bleibt.

2. Mikroskop nach Anspruch 1, dadurch gekennzeichnet, daß die Halterung (27) eine Wandfläche (31) aus magnetischem Material aufweist und in die Gleitfläche (32) Permanentmagnete (33) im Abstand von der Wandfläche (31) eingesetzt sind.

3. Mikroskop nach Anspruch 2, dadurch gekennzeichnet, daß der Abstand der Permanentmagnete (33) von der Wandfläche (31) veränderbar ist.

4. Mikroskop nach Anspruch 1, dadurch gekennzeichnet, daß zwischen dem Okulartubus (10) und der Aufnahme (18) ein Optikteil (12) angeordnet ist.

5. Mikroskop nach Anspruch 1, dadurch gekennzeichnet, daß als Bildinformationsträger (29) ein gerahmtes Diapositiv verwendet ist, das in der Halterung (27) mittels einer Feder (34) festgeklemmt ist.

6. Mikroskop nach Anspruch 1 und 2, dadurch gekennzeichnet, daß als Gleitfläche (32) ein reibungsarmer Kunststoff, wie beispielsweise Polytetrafluoräthylen, verwendet ist.

## Claims

1. Microscope with a receptacle (18), which is fastened at the eyepiece tube (10) thereof, for the superposition of a microscope image with additional image information by means of projection and reflection thereof into the intermediate image plane in the eyepiece tube (10), characterised thereby, that an image information carrier (29) is fastenable in a mount (27) and freely movable therewith within the receptacle (18) on a sliding surface (32), which is parallel to the object plane (30) formed by the image information carrier (29) as well as fixable in any set position.

2. Microscope according to claim 1, characterised thereby, that the mount (27) displays a wall surface (31) of magnetic material and permanent magnets (33) are inserted at a spacing from the wall surface (31) into the sliding surface (32).

3. Microscope according to claim 2, characterised thereby, that the spacing of the permanent magnets (33) from the wall surface (31) is variable.

4. Microscope according to claim 1, characterised thereby, that an optical part (12) is arranged between the eyepiece tube (10) and the receptacle (18).

5. Microscope according to claim 1, characterised thereby, that a framed positive transparency, which is clamped fast in the mount (27) by means of a spring (34), is used as image information carrier (29).

6. Microscope according to claim 1 and 2, characterised thereby, that a low-friction synthetic material, such as for example polytetrafluoroethylene, is used as sliding surface (32).

## Revendications

1. Microscope comprenant une réception (18) susceptible d'être fixée à un tube oculaire (10) de celui-ci, pour la transmission d'une image microscopique avec des informations d'image supplémentaires, par l'intermédiaire d'une projection et d'une introduction par miroir de celles-ci dans le plan d'image intermédiaire dans le tube oculaire (10), caractérisé en ce qu'un support d'informations d'image (29) peut être fixé dans un support (27) et est déplaçable librement dans la réception (18), avec celui-ci, sur une surface de glissement (32) parallèlement au plan d'objet (30) formé par le support d'informations d'image (29) et est ainsi susceptible de demeurer fixe dans chaque position ajustée.

2. Microscope selon la revendication 1, caractérisé en ce que le support (27) comprend une surface de paroi (31) en un matériau magnétique et en ce que des aimants permanents (33) peuvent être placés à une certaine distance de la surface de paroi (32) dans la surface de glissement (32).

3. Microscope selon la revendication 2, caractérisé en ce que l'écart des aimants permanents (33) de la surface de paroi (31) est variable.

4. Microscope selon la revendication 1, caractérisé en ce qu'une pièce optique (12) est disposée entre le tube oculaire (10) et la réception (18).

5. Microscope selon la revendication 1, caractérisé en ce qu'un diapositif cadré est utilisé comme support d'informations d'image (29), qui peut être fixé par serrage dans le support (27) à l'aide d'un ressort (34).

6. Microscope selon l'une des revendications 1 ou 2, caractérisé en ce qu'une matière plastique à faible frottement, par exemple en polytétrafluoréthylène est utilisé comme surface de glissement (32).
